# EUROPEAN PATENT APPLICATION

(11) **EP 2 388 176 A2**
(43) Date of publication of application: **23.11.2011**
(21) Application number: 11380027.0
(22) Date of filing: 31.03.2011
(51) Int. Cl.: B62D 1/16, B62D 1/189, B62D 1/19

(54) **Multifunction support set for steering column**

(30) Priority: 11.05.2010 ES 201030695
(71) Applicant: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio

(57) **Abstract**

The invention refers to improvements to steering column supports, in which this support incorporates several functions, such as: securing the steering column to the vehicle; pivoting the column shaft to enable height adjustment of the vehicle steering wheel; support for the anchoring system of said height (and depth if required) adjustment system for the vehicle steering wheel position; an energy absorption system if the column collapses, necessary in case of collision; support for any other system around the column, such as electric cables, springs, etc.

## Description

### Object of the Invention.

More specifically the invention refers to improvements to steering column supports, to enable immobilisation of the steering column in the car cockpit, with the aim of simplifying manufacturing, while at the same time improving assemblability and both vertical and longitudinal adjustment.

### State of the Art.

On the market there are and therefore can be considered as state of the art, steering columns which in addition to turning the front wheels, are designed to prevent, with suitable means, the column moving towards the driver in case of a frontal crash, which could cause injury if the column moves towards the driver and impacts the chest and nearby areas.

These columns usually use joints between the male and the female elements that form the column, joints which break when subject to pressure such as by vehicle impact, as well telescopic devices or angled articulations to stop the pressure of the shock being transmitted straight up the column. Additionally, these joints are combined with devices that enable the column to be adjusted in height and sometimes also in depth, with the purpose of adapting the position of the steering wheel to the driver's size, seat position and geometry of the vehicle, in order to facilitate getting in and out of the vehicle as well as driving comfort.

These columns are normally secured inside the car cockpit with supports incorporating the steering column inside them, means to adjust the steering wheel height and depth, and means for energy absorption in case of a crash.

Invention Patent No. 200500606 of the same holder, describes and claims an adjustment element such as a bush, designed to enter, at least partially into the inside of a female tubular element, and being placed between the same and a male tubular element. It can have on its surface balls and slots to facilitate its expansion, being able to extend one of these slots longitudinally along the entire surface of the bush, thus configuring an open profile.

Other types of columns use energy absorption devices in case of vehicle crash, for instance in the Invention Patent No. 9900397 of the same holder, which shows an energy absorption system in continuous mode with relative displacement, by means of lamination of a metallic strip between two parts of defined section.

### Scope of the Invention:

To bring together the different supports (more than two) which are used in the state of the art, into a single part so it can carry out and allow at least the following functions:
- To immobilise the steering column in the car cockpit.
- To incorporate a means of column height adjustment.
- To incorporate a means of anchoring said height (and depth) adjustment
- An energy absorber in case of car crash, avoiding driver injury.
- To provide support for elements around the steering column, such as electric cables, springs, etc.

### Description of the Invention.

The invention described is based on the design of a steering column support, which incorporates means for energy absorption in case of crash, while at the same time has means for the vertical and depth adjustment of the same, and consequently of the steering wheel fitted to these columns.

Advantageously, the column support which allows its mounting and incorporation into the vehicle cockpit is of a new and original design, as it incorporates in a single piece the functions of holding and immobilising the column in the cockpit, of adjustment and locking in height and depth, while at the same time this support acts as a means to absorb energy in case of a crash.

The support set described in this document is basically composed of two parts: a main support, which we will call general, and an adjustment support.

The general support combines the functions of securing the column, pivoting and collapse, whereas the adjustment support complements the functions of collapse and of adjustment.

The general support has a machined surface, which by means of the corresponding fold lines, forms a sloping and angular plane from the edges of which perpendicular surfaces project perpendicularly to this plane, in the which some orifices have been made for securing and for turning the column shaft.

An angular surface projects from this plane, one of the faces of which incorporates some grooves as anchoring points for the anchoring of the column to the car cockpit, whereas on the other face there are some tabs with holes for immobilising the servo steering which assists the driver with an electric motor and a geared motor when the steering wheel and consequently the steering column is turned.

The back of the support which we call secondary is a flat surface, which incorporates at its lower part a U-shaped support, called adjustment support, which in case of collapse is guided by guiding tabs, which emerge form the flat surface of the main support.

The flat surface has two parts, a central or plateau, which is related to the side surfaces or fins included in the upper plane by means of the corresponding, angled surfaces. On the central part of the plateau there is an energy absorption strip, and on the right and left of this strip, there are some grooves parallel to this strip. On these fins there are holes to anchor the steering column with the help of nuts and bolts.

The energy absorption strip serves both as a guide for the collapse pad, which slides over the plateau, and whose smaller side bases, those of the pad, are guided by the angled surfaces which join the plateau with the side fins, as this pad has nuts and bolts to secure it, these bolts slide along the grooves. The pad incorporates ribs on one of its sides, with a space between them to span the energy absorption strip.

On the lower side of the plateau there is a U-shaped adjustment support, secured to the general support and the aforementioned pad with the corresponding bolts. On the arms of the adjustment support there are slots for vertical guidance of the steering column.

Other details and characteristics shall be shown throughout the description below referring to drawings attached to this report which are shown for illustrative but not limiting purposes a practical embodiment of the invention.

### Description of the drawings.

Figure 1 is a perspective of the general support (1) in which the main support (2) and the adjustment support (3) can be seen.
Figure 2 is a perspective of the support set (1) which displays and exploded view of the main support (2), and the adjustment support (3), joined by the collapse pad (4).
Figure 3 is a front elevation view of the general support (1) fitted on a steering column (16).

### Description of a preferred embodiment of the invention.

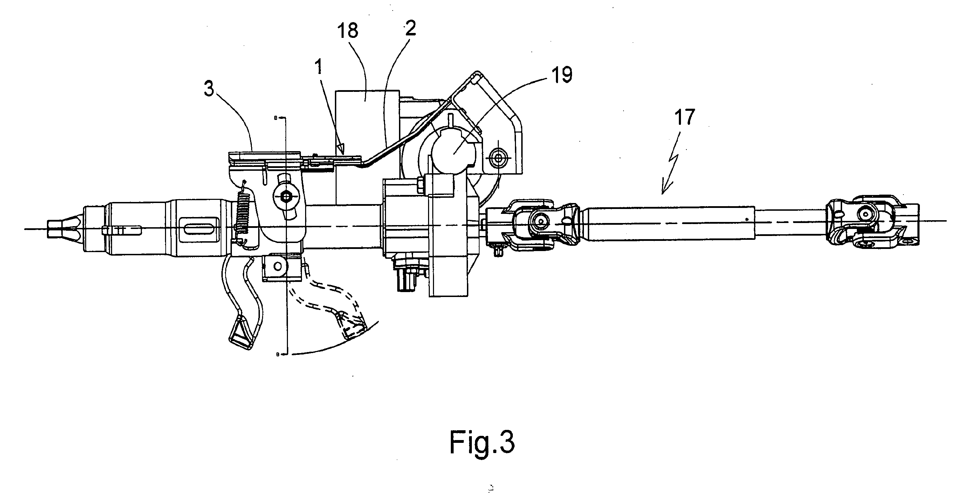

In one of the preferred embodiments of the invention, the steering column (17), see figure 3, whose features are not part of the invention, incorporates means of assistance, which we will call power steering, comprising an electromotor (18), whose shaft is attached to a reduction device, formed by a reduction gearbox (19).

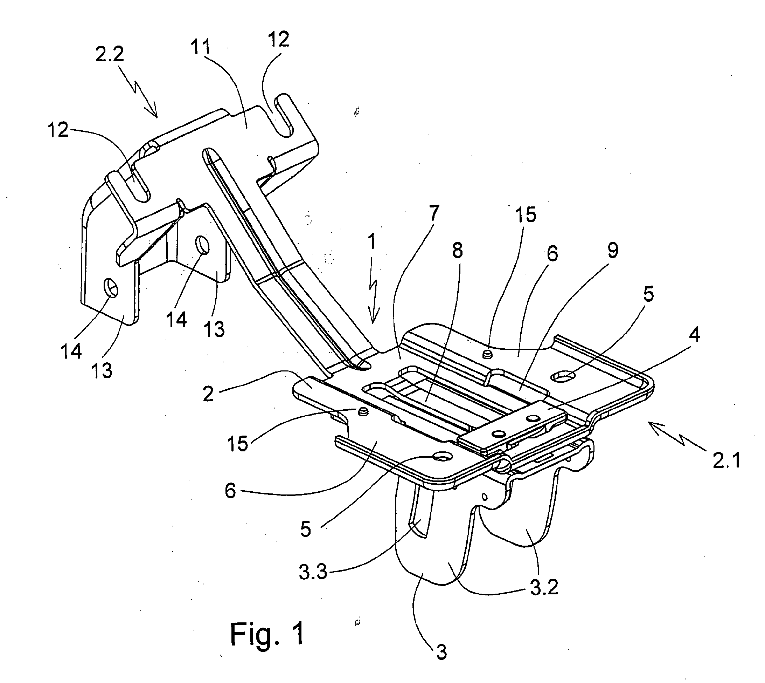

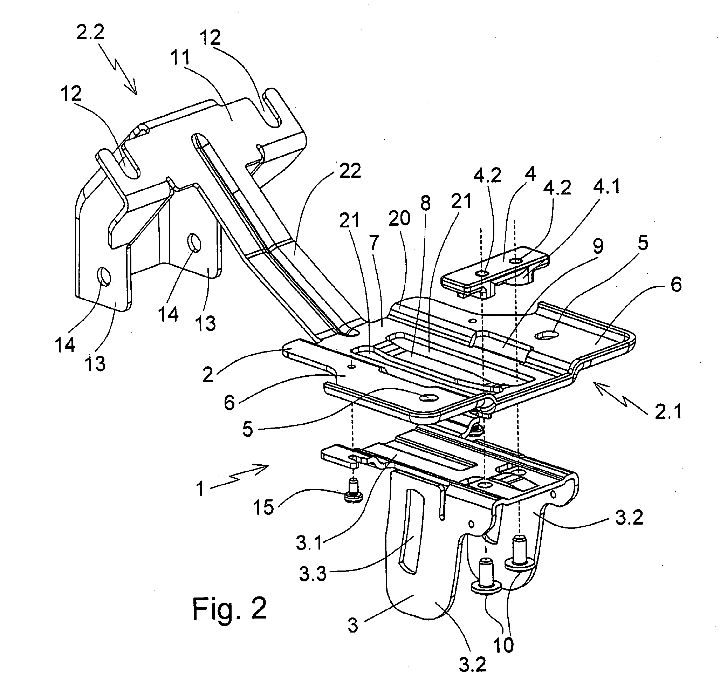

The column (17) as an assembly is fitted to the body shell of the car with the support set (1) purpose of the invention, shown in figures 1 and 2.

This support set (1) is formed principally by the general support (2) and the adjustment support (3).

The support set (1) is secured to the cockpit of the vehicle by nuts and bolts not shown in figures 1 and 2. These bolts go through holes (5) made on the back (2.1) of the general support (2), and more specifically in the fins (6).

The back part (2.1) of the main support (2) has, as can be seen in the figures, two fins (6), joined by a flat area or plateau (7) via angled surfaces (20).

On the central part of the plateau (7) there is an absorption energy strip (8), which collapses in the event of a car crash (8), with empty areas (21) on the right and a left of the strip (8), these fins (6) are joined to the plateau (7) by means of angled surfaces (20), which have some slots (9).

The energy absorption strip (8) works together with the collapse pad (4), which as may be seen in figure 2, thanks to the special configuration of this pad (4), with a prism-shaped body with a larger lower base from which emerge projections (4.1) which are located on the right and a left of the energy absorption strip (8) may slide along this strip (8), in a guided fashion, causing its deformation in case of vehicle crash.

The energy absorption strip (8) has two different widths: a1 and a2, so that a1 > a2. In normal conditions, the collapse pad (4) is in the position seen in figure 2, making it possible in case of a crash, when the steering column slides (17), to deform the strip (8) at its wider part "a1" by the action of the projections (4.1) of the load (4), making the force of the shock which is transmitted from the steering wheel to the column (17), and form this to the adjustment support (3), determine the stroke of (3-4) with regard to the general support (2) the pad (4) secured to the adjustment support (3) by means of the joining terminals (10).

The front part (2.2) of the general support (2) joined to the back part (2.1) by means of the strut (22), is an angled body by planes, in turn in plane (11) there are open slots (12) to secure the general support (2) to the vehicle structure.

From the planes emerge perpendicularly some skirts (13) which have some holes (14) to house the pivoting shaft A-A' of the steering column.

The open slots (12) enable the support set (1) to adapt to different car cockpit geometries.

The back part (2.1) of the general support (2) as shown in the figures, is joined by the plateau (7) to an adjustment support (3) by its base (3.1), by means of the corresponding screws and/or rivets (15), or similar means, this adjustment support (3) is U-shaped with vertical arms (3.2) perpendicular to the base (3.1), facing downwards.

The joint between the general support (2) and the base (3.1) of the support (3) is made by means of the collapse pad (4) with holes (4.2) through which the bolts are threaded (10), as shown in figure 2.

On the arms (3.2) of the adjustment support (3) there are elongated slots (3.3), which with the aid of suitable means, facilitates the vertical movement of the steering wheel connected to the column (17).

These means comprise a lever, which turns on a shaft not represented in figures, which is fixed solidly to the adjustment support (3) by suitable means.

Having sufficiently described this invention using the figures attached, it is easy to understand that any modification may be made to the detail which may be deemed to be appropriate, whenever these changes do not alter the essence of the invention summarised in the following claims.

## Claims

1. **"LONGITUDINAL AND VERTICAL ADJUSTABLE STEERING COLUMN"** with means for energy absorption in case of shock, and means for vertical and depth adjustment of the column steering wheel, **characterized in that** the column is secured to the inside of the vehicle by a multi-purpose support, which incorporates the functions of vehicle column support, turning the steering wheel shaft, support for the locking system, energy absorption system in case of collapse and support for elements around the column.

2. **"LONGITUDINAL AND VERTICAL ADJUSTABLE STEERING COLUMN"** according to the claim 1 **characterized in that**, the back part of the support has two fins joined by a flat area or plateau, in the central part of the plateau there is an energy absorption strip, with empty areas on the right and a left, the fins join the plateau by means of the angled area, with grooves.

3. **"LONGITUDINAL AND VERTICAL ADJUSTABLE STEERING COLUMN"** according to the claim 1 **characterized in that** the front part of the general support, is an angled body by planes, and in turn in plane there are open slots.

4. **"LONGITUDINAL AND VERTICAL ADJUSTABLE STEERING COLUMN"** according to the claim 1 **characterized in that** The back part of the general support, is joined by the plateau to an adjustment support by its base and to the collapse pad, by means of the corresponding screws, this adjustment support is U-shaped with vertical arms perpendicular to the base.

5. **"LONGITUDINAL AND VERTICAL ADJUSTABLE STEERING COLUMN"** according to the claim 1 **characterized in that** the joint between the main support and the base of the adjustment support is made by means of the collapse pad with holes through which the threaded bolts are threaded.

6. **"LONGITUDINAL AND VERTICAL ADJUSTABLE STEERING COLUMN"** according to the claim 1 **characterized in that** on the arms of the adjustment support there are elongated slots, which with the aid of suitable means, facilitates the vertical movement of the steering column.

7. **"LONGITUDINAL AND VERTICAL ADJUSTABLE STEERING COLUMN"** according to the claim 1 **characterized in that** from the planes emerge some skirts which have some holes to house the ends of a pivoting shaft of the steering column.

8. **"LONGITUDINAL AND VERTICAL ADJUSTABLE STEERING COLUMN"** according to the claims 1 and 2 **characterized in that** the collapse pad has a prism-shaped body, from whose larger lower base projections facing downwards emerge perpendicularly, which deform the strip when the pad slides on the energy absorption strip.

9. **"LONGITUDINAL AND VERTICAL ADJUSTABLE STEERING COLUMN"** according to the claim 2 **characterized in that** the energy absorption strip has two different widths or heights on the longitudinal direction.
